(19) Europäisches Patentamt
European Patent Office
Office européen des brevets

(11) Publication number: 0 194 351 B1

# (12) EUROPEAN PATENT SPECIFICATION

(45) Date of publication of patent specification: 05.12.90

(51) Int. Cl.[5]: C 08 G 79/02, C 08 J 9/06, C 08 L 85/02

(21) Application number: 85115856.8

(22) Date of filing: 12.12.85

## (54) Aryloxy-alkoxy-alkenylphenoxy-substituted polyphosphazenes.

(30) Priority: 18.12.84 US 683022

(43) Date of publication of application: 17.09.86 Bulletin 86/38

(45) Publication of the grant of the patent: 05.12.90 Bulletin 90/49

(84) Designated Contracting States: AT BE CH DE FR GB IT LI LU NL SE

(56) References cited:
EP-A-0 162 631
FR-A-2 294 208
FR-A-2 342 312
US-A-4 535 095

(73) Proprietor: ETHYL CORPORATION
Ethyl Tower 451 Florida Boulevard
Baton Rouge Louisiana 70801 (US)

(72) Inventor: Penton, Harold Roy
18421 Plantation Court
Prairieville, Louisiana 70769 (US)
Inventor: Pettigrew, Francis Alexander
17433 Breman Drive
Baton Rouge, Louisiana 70817 (US)

(74) Representative: Dipl.-Ing. Schwabe, Dr. Dr. Sandmair, Dr. Marx
Stuntzstrasse 16
D-8000 München 80 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 194 351 B1

## Description

Polyphosphazenes are polymers containing a plurality of

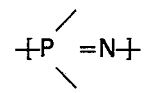

groups wherein substituents are bonded to phosphorus. The polyphosphazenes which are the concern of this invention are high molecular weight linear polyphosphazenes having molecular weights from 10,000 up to 5,000,000 or higher. They are substantially linear and have little if any cross-linking. In general, they are soluble in benzene, toluene, cyclohexane, and tetrahydrofuran and are relatively insoluble in linear aliphatic hydrocarbons such as hexane or heptane. Groups substituted on phosphorus include phenoxy, alkylphenoxy, alkoxy and alkenylphenoxy (e.g. o-allylphenoxy) and the like.

Cellular plastics have been available for many years. One of the first of such materials was cellular rubber dating to the 1910—1920 period. Subsequently cellular compositions were made from latex, phenolformaldehyde resins, urea-formaldehyde resins, PVC, polyurethane, cellulose acetate, polystyrene, polyethylene, epoxies, ABS resins, silicones and very recently polyphosphazenes. Polyphosphazene foams have very desirable properties in that they are highly fire resistant and when subject to direct flame do not produce toxic smoke which is encountered with many other common foamed materials, notably polyurethanes.

Methods of making cellular polyphosphazenes are known. Various procedures are described in U.S. 4,026,838; U.S. 4,055,520; U.S. 4,055,523; U.S. 4,107,108; U.S. 4,189,413 and others. In general, the foams are made by mixing the polyphosphazene gum, a blowing agent and a peroxide or sulfur-type curing agent and heating the blended components to activate the blowing agent and cure the resultant foam.

Polyphosphazene copolymers which are substituted with both alkoxy and aryloxy substituents in the ratio of 4:1 to 2:3 are described in Reynard et al U.S. 3,856,712. Peroxide and sulfur cured fluoroalkoxy-substituted polyphosphazenes containing alkenylphenoxy substituents are described in Kyker et al U.S. 3,970,533. The amount of alkenylphenoxy ranges from 0.02 mole percent when using a peroxide cure to a maximum of 6 mole percent when using a sulfur cure. Aryloxy and alkoxy substituted polyphosphazenes which have 0.1—5 mole percent alkenylphenoxy substituents and are sulfur curable are described in Cheng U.S. 4,116,785.

EP—A—0 162 631 discloses the preparation and use of polyphosphazenes comprising substituents selected from aryloxy, alkoxy, substituted aryloxy, substituted alkoxy and allylphenoxy.

FR—A—2 342 312 describes polyphosphazenes comprising non-fluorinated substituents, e.g. unsubstituted or substituted alkoxy and aryloxy, and also an unsaturated group, e.g. o-allylphenol.

From FR—A—2 294 208 curable polyphosphazene compositions are known; the polyphosphazene used is substituted by aryloxy, and the composition comprises a compound containing at least two alkenyl groups, and, as the curing agent, an organic peroxide.

The object of the present invention is to provide polyphosphazene foams of low density.

It has now been discovered that low density polyphosphazene foam can be made from polyphosphazene gums which are substituted with phenoxy, alkylphenoxy, alkoxy and alkenylphenoxy substituents. In the absence of the alkenylphenoxy groups, a foam would not form.

An embodiment of the invention is a sulfur cured polyphosphazene foam having a density below 96.1 kg/$m^3$ (6 pounds per cubic foot) said foam comprising 10—65 weight percent inorganic filler and 20—50 weight percent of a cured polyphosphazene elastomer which has a

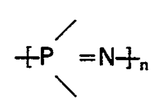

backbone in which n has an average value of at least 100, e.g. 100—1,000,000 or more and the phosphorus substituents prior to cure comprise at least 20 mole percent phenoxy, at least 20 mole percent lower alkylphenoxy, 1—50 mole percent alkoxy and 0.5—20 mole percent alkenylphenoxy, and said substituents are randomly distributed along said backbone.

In a preferred embodiment the polyphosphazene gum contains at least 30 mole percent phenoxy, at least 30 mole percent lower alkylphenoxy, 5—50 mole percent alkoxy and 6—15 mole percent alkenylphenoxy substituents. In a still more preferred embodiment the substituents are at least 35 mole percent phenoxy, at least 35 mole percent lower alkylphenoxy, 7—23 mole percent alkoxy and 7—12 mole percent alkenylphenoxy.

The alkylphenoxy groups are those in which the alkyl is a lower alkyl, that is an alkyl containing 1—4 carbon atoms. The preferred alkyl substituent is ethyl. The more preferred alkylphenoxy groups are the p-alkylphenoxy groups. The most preferred alknylphenoxy group is p-ethylphenoxy.

Although any alkoxy substituent can be used, the preferred alkoxy substituents are those which contain 1—8 carbon atoms such as methoxy, ethoxy, propoxy, butoxy, isobutoxy, n-pentoxy, isopentoxy, n-hexoxy, 2-ethylhexoxy and the like including mixtures thereof.

Useful alkenylphenoxy substituents include any phenoxy substituent having an olefinically unsaturated aliphatic side chain. Of these, the more preferred substituents are the allylphenoxy substituents. Of these, the most preferred substituent is o-allylphenoxy, which preferably is present in an amount of 6—15 mole percent.

The high molecular weight substantially linear polyphosphazenes of the invention are made by the proper substitution of a substantially linear polyphosphonitrilic chloride. These in turn are made by the reaction of a stoichiometric excess of ammonium chloride with phosphorus pentachloride in an inert solvent such as monochlorobenzene at 120—130°C. This produces a mixture of cyclic phosphonitrilic chloride that is about 90% trimer. The trimer is purified by crystallization or distillation or both and the purified trimer is polymerized by heating in a sealed vessel under vacuum or an inert atmosphere at 220—250°C for 8—24 hours. Preferably a small amount of catalyst such as is described in U.S. 4,123,503 or U.S. 4,226,840 is included. The linear polymer is then recovered by dissolving in a solvent such as cyclohexane, toluene or tetrahydrofuran followed by precipitation by addition of a non-solvent such as heptane. Low molecular weight oligomer and trimer will remian in solution. The coagulated linear polyphosphonitrilic chloride is then substituted by reacting a solution of the polyphosphonitrilic chloride with a solution of sodium aryloxides and alkoxides containing the proper ratio of phenoxide, alkylphenoxide, alkoxide and alkenylphenoxide. Tetrahydrofuran (THF) is a preferred solvent. In a more preferred embodiment, the sodium alkenylphenoxide is reacted first with a THF solution of the polyphosphonitrilic chloride at 50—150°C and then a THF solution of the sodium phenoxide, alkylphenoxide and alkoxide is added and reacted to complete the substitution.

The ratio of each substituent can be controlled by using the proper number of equivalents of each aryloxide and alkoxide. For example, if the polyphosphonitrilic chloride solution contains 100 equivalents of replaceable chlorine, then the solution should be reacted with 20—80 equivalents of sodium phenoxide, 20—80 equivalents of sodium alkylphenoxide, 1—50 equivalents of sodium alkoxide and 0.5—20 equivalents of sodium alkenyl phenoxide selected such that the total number of equivalents is in a 0—10 percent stoichiometric excess.

The solution is then neutralized with an acid such as sulfuric acid. It is then poured into aqueous isopropanol to coagulate the gum. The gum is purified by re-dissolving in tetrahydrofuran and again coagulated by pouring into methanol. The substituted polyphosphazene precipitates in the form of white crumbs and is separated and dried under vacuum.

The following examples show the preparation of polyphosphazene gums both with and without alkenylphenoxy substituents.

Example 1

This example shows the preparation of a polyphosphazene gum having phenoxy, alkylphenoxy and alkoxy substituents but without alkenylphenoxy substituents. This gum is outside the present claims.

In a reaction vessel was placed 685.7 grams of a 16.9 weight percent solution in THF of a high molecular weight linear polyphosphonitrilic chloride having a limiting viscosity number (LVN) of 0.65. The solution contained 115.89 grams of the polyphosphonitrilic chloride which represented 2.0 equivalents of Cl. An additional 320 grams of tetrahydrofuran (THF) was used to rinse the polymer into the reaction vessel. In a separate vessel was placed 75.9 grams of a THF/cyclohexane solution containing 120 milliequivalents (meq) of sodium phenoxide, 729.7 grams of a THF/cyclohexane solution containing 540 meq of sodium phenoxide and 540 meq of sodium p-ethylphenoxide and 450.4 grams of a n-butanol solution containing 1000 meq of sodium n-butoxide. The resultant aryloxide/alkoxide solution was added rapidly to the stirred polyphosphonitrilic chloride solution. The temperature rose from 25°C to 46°C. The vessel was sealed and pressurized with nitrogen to 344.75 kPa (50 psig) and heated to 150°C. After 16 hours the vessel was cooled and the contents removed. A 50 ml aqueous solution containing 9.8 grams of $H_2SO_4$ was added to the mixture with stirring. A clear solution containing a white precipitate resulted. The mixture was centrifuged and the clear liquid poured into 3 volumes of a 90:10 isopropanol/water solution which had been acidified with $H_2SO_4$ to pH 1.0. The substituted polyphosphazene precipitated and was separated. The precipitate was then dissolved in 2 liters of THF. This solution was poured into 2.5 volumes of methanol causing the substituted polymer to precipitate in the form of polymer crumb. The crumb was removed and washed with methanol and then vacuum dried at 50°C overnight yielding 188 grams of dry polyphosphazene. Analysis by $^{31}$P-NMR showed 52.5 mole percent aryloxide substitution and 47.5 mole percent butoxy substitution. The polymer had a glass transition temperature (Tg) of −61°C.

Example 2

This example shows the preparation of a high molecular weight linear polyphosphazene substituted with phenoxy, p-ethylphenoxy, butoxy and o-allylphenoxy groups according to the present invention.

In a stainless steel pressure reaction vessel was placed 685.7 grams of a 16.9 weight percent solution in THF of linear high molecular weight polyphosphonitrilic chloride (LVN 0.65). This solution contained 115.89 grams of polyphosphonitrilic chloride which represented 2000 meq of replaceable Cl. Following this, 95.9 grams of a THF/cyclohexane solution of sodium o-allylphenoxide was added. This represented 140 meq of o-allylphenoxide. The stirred mixture was heated to 70°C and held at at temperature for 1 hour. In a separate vessel was placed 67.1 grams of a THF/cyclohexane solution containing 106 meq of sodium

phenoxide, 644.6 grams of a THF/cyclohexane solution containing 477 meq of sodium phenoxide and 477 meq of sodium p-ethylphenoxide and 456.6 grams of a n-butanol solution containing 1000 meq of sodium n-butoxide. The stainless steel reactor was cooled to 60°C and the above combined THF solution was added rapidly to the reactor and rinsed in with an additional 150 grams of THF. The reactor was sealed and pressurized to 344.75 kPa (50 psig) with nitrogen and heated to 150°C. After 16y hours the reaction was cooled and the contents removed and neutralized with 50 mls of an aqueous solution containing 9.8 grams of $H_2SO_4$. An additional 75 ml of water was added and the mixture was centrifuged to remove salt crystals. The liquid was poured slowly into 3 volumes of a 90:10 isopropanol/water solution which had been acidified to pH 1.0 with $H_2SO_4$. The polymer precipitated and was washed with methanol and then dissolved in 2 liters of THF. The THF polymer solution was slightly cloudy so it was centrifuged to remove a small amount of salt. The solution was poured into 2.5 volumes of methanol which coagulated the substituted polyphosphazene as a white crumb. The white crumb was dried under vacuum. Analysis by $^{31}P$-NMR showed 52.4 mole percent aryloxide and 47.6 mole percent butoxide. O-allylphenoxide content was 7 mole percent. The Tg was −60°C.

The polyphosphazene gum is most useful in making foamed compositions. Such compositions can be foamed to a sulfur cured polyphosphazene foam having a density below 96.1 Kg/m$^3$ (6 pounds per cubic foot) said foam comprising 10—65 weight percent inorganic filler and 20—50 weight percent of a cured polyphosphazene elastomer which has a

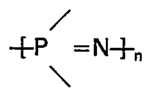

backbone in which n has an average value of at least 100 and the phosphorus substituents prior to cure comprise at least 20 mole percent phenoxy, at least 20 mole percent lower alkylphenoxy, 1—50 mole percent alkoxy and 0.5—20 mole percent alkenylphenoxy and said substituents are randomly distributed along said backbone.

In making a polyphosphazene foam, the gum is first blended with other components which include inorganic fillers, blowing agents and curing agents. Accordingly, another embodiment of the invention is a foamable curable polyphosphazene composition comprising (a) a substantially linear polyphosphazene elastomer having the structure

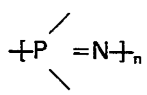

in which n has an average value of at least 100 and the phosphorus substituents comprise at least 20 mole percent phenoxy, at least 20 mole percent lower alkylphenoxy, 1—50 mole percent alkoxy and 0.5—20 mole percent alkenylphenoxy and said substituents are randomly distributed along said backbone, (b) an inorganic filler, (c) a blowing agent and (d) a sulfur curing agent.

An essential component of the formulation is a blowing agent. The amount of blowing agent should be that which will evolve sufficient gas to give a foam of the desired density but not an excessive amount which results in splitting of the foam. Blowing agents decompose to evolve gas upon heating. This decomposition temperature varies over a wide range with different foaming agents. Many foaming agents are azo compounds which evolve nitrogen when undergoing thermal decomposition. Examples of blowing agents include dinitrosopentamethylenetetramine, 4,4′-oxybis(benzenesulfonylhydrazide), azodicarbonamide, ammonium carbonate, ammonium bicarbonate, sodium bicarbonate, ammonium nitrite, tert.-butylamine nitrite, guanidine nitrate, guanylurea nitrite, sodium borohydride, potassium borohydride, urea, biuret, N-nitro urea, diazoaminobenzene, 2,2′-azobis(2-methylpropionitrile), 2,2′-azobis, isobutyronitrile, 1,1′-azobiscyclohexanecarbonitrile, azobisisobutyramidoxime, azobisformamide, N,N′-di-tert-butylazobisformamide, N,N′-diphenylazobisformamide, phenylhydrazine, benzylmonohydrozone, benzenesulfonyl hydrazide, methyl carbanilate, 4,4′-oxybis(benzenesulfonyl hydrazide), 3,3′-sulfonyl-bis(benzenesulfonyl hydrazide), cyanuric trihydrazide, 4,4′-oxybis(benzenesulfonyl semi-carbizide), benzoylazide, p-tert-butylbenzoylazide, diphenyl-4,4′-disulfonyldiazide, N,N′-dimethyl-N,N′-dinitroso terephthalamide and the like.

Curing agents encompass a broad range of compounds which serve to promote cross-linking of the polyphosphazene. The curing agent used to make the present foamed compositions are the sulfur-type curing agents generally referred to as vulcanizing systems. A typical sulfur vulcanizing system comprises sulfur, an accelerator and promoters. Zinc oxide is usually included with the sulfur. Other accelerators include zinc dialkyldithiocarbamates (e.g., zinc dimethyldithiocarbamate, zinc dibutyldithiocarbamate and the like). Other useful accelerators are zinc benzothiazylsulfide, N-cyclohexyl-2-benzothiazylsulfenamide, 4,4′-dithiomorpholine, fatty acids in combination with zinc oxide such as stearic acid, zinc fatty acid salts such as zinc stearate, tetraalkylthiuram monosulfide, tetraalkylthiuram disulfide, 2-benzothiazolyl disulfide, zinc benzothiazolyl mercaptide, mercaptobenzothiazole, 2-benzothiazolylsulfenamide, amines, diphenyl guanidine, thiobisamines and the like.

Another component that is usually included in polymer foam compositions is a filler. These are usually inorganic materials although some organic materials are used. Examples of fillers are clay, talc, mica, asbestos, feldspar, bentonite, wollastonite, fullers earth, pumice, pyrophillite, rottenstone, slate flour, vermiculite, calcium silicate, magnesium silicate, alumina, hydrated alumina, antimony oxide, magnesia, titania, zinc oxide, silica, calcium carbonate, barium carbonate, magnesium carbonate, barium sulfate, calcium sulfate, lime, magnesium hydroxide, carbon black, graphite, metal powders, fibers and whiskers, barium ferrite, magnetite, molybdenum disulfide, glass fibers or flakes, ground glass and the like.

The polyphosphazene formulations which are foamed according to the present invention generally include a plasticizer. These can be liquids which when blended with the polyphosphazene gum and the other components tend to reduce the viscosity of the mass and assist in making a homogenous blend. Useful plasticizers include tricresylphosphate, triphenylphosphate, cresyldiphenylphosphate, butyl octyl phthalate, dibutyl phthalate, dicyclohexyl phthalate, diisodecyl phthalate, di-2-ethylhexyl phthalate, ditridecyl phthalate, isooctylisodecyl phthalate, diisodecyl adipate, di-2-ethylhexyl adipate, octyldecyl adipate, diisobutyl adipate, diisooctyl adipate, di-2-ethylhexyl azelate, diisodecyl azelate, dibutyl maleate, glycerol ricinoleate, isopropyl myristate, isopropyl palmitate, butyl oleate, glycerol trioleate, methyl oleate, 2-ethylhexyl oleate, dibutyl sebacate, di-2-ethylhexyl sebacate, butyl stearate, 2-ethylhexyl stearate, triethyleneglycol dicaprate, ethylene glycol terephthalate polyesters, diethylene glycol dipelargonate, polyethylene glycol 200 dibenzoate, polyethylene glycol 600 dibenzoate, glycerol triacetylricinoleate, adipic acid glycol polyester 6,000 and the like.

The amount of the different components in the formulation can vary widely based upon parts by weight per 100 parts by weight of polyphosphazene gum. A useful range is given in the following table:

| | Parts by weight |
|---|---|
| Polyphosphazene gum | 100 |
| Sulfur | 5—20 |
| Accelerator | 0.1—5 |
| Blowing agent | 10—50 |
| Filler | 50—300 |
| Plasticizer | 5—50 |

The components in the formulated composition are then subjected to mechanical mixing or mastication to form a substantially uniform blend. This mixing is conducted in the same type equipment used in compounding rubber prior to vulcanization. Suitable mixing equipment on the laboratory scale is marketed under the trademark "Brabender". Larger mixing equipment is marketed under the "Banbury" trademark. These are heavy duty mixers that crush and masticate the formulation until it forms a homogenous blend.

After the mixing operation, the composition is shaped into the desired form such as slabs for use in insulation or cushions. It can also be extruded into hollow cylindrical forms for use as pipe insulation.

The shaped composition can then be aged at a temperature above the predetermined maximum mixing temperature but below the activation temperature of the blowing agent. This operation causes a limited amount of cross-linking to occur raising the viscosity of the composition such that the blowing gas does not escape during the blowing operation. This step is usually done in a pre-cure oven. Good results have been achieved when the shaped composition is maintained at a pre-cure temperature of 100—120°C for a period of 5—20 minutes.

In the next operation, the shaped pre-cure composition is heated in an unconfined environment to a temperature high enough to activate the blowing agent. The composition then expands forming a cellular polyphosphazene article. The term "unconfined environment" means that there is space available into which the shaped polyphosphazene composition can expand during cell development. As it reaches its final volume it may again be confined in some form or mold.

The gums made in Examples 1 and 2 were subjected to foaming operations. The following formulation was used:

| | Parts by weight |
|---|---|
| Polyphosphazene gum | 35.0 |
| Hydral 710®[1] | 65.4 |
| Zinc stearate | 3.6 |
| Silastic HA-2®[2] | 3.45 |
| Carbowax 3350®[3] | 0.72 |
| Celogen AZ 130®[4] | 9.1 |
| Titanium oxide[5] | 2.8 |
| Plasticizer[6] | 3.6 |

[1]Alcoa brand hydrated alumina.
[2]Dow-Corning brand silicon filled methyl vinyl silicone.
[3]Union Carbide brand polyethyleneoxide.
[4]Naugatuck brand azodicarbonamide.
[5]Pigment grade.
[6]An oil made by substituting trimer with phenoxy, p-ethylphenoxy, and o-allylphenoxy groups.

The components were blended in a Brabender mixer for 9 minutes at 60 rpm.
A curing concentrate was separately formulated as follows.

| | Parts by weight |
|---|---|
| Polyphosphazene gum[1] | 100 |
| Sulfur | 175 |
| Hydral 710® | 10 |
| Silastic HA-2® | 10 |
| Vanax 552®[2] | 50 |
| Methyl Zimate[3] | 12.5 |
| Butyl Zimate[4] | 12.5 |
| Water | 7.5 |

[1]A poly(aryloxy) phosphazene containing 4.2 mole percent o-allylphenoxy.
[2]Vanderbilt brand piperidinium pentamethylene dithiocarbamate.
[3]Vanderbilt brand zinc dimethyldithiocarbamate.
[4]Vanderbilt brand zinc dibutyldithiocarbamate.

The above concentrate was mixed in a Brabender at low speed and then in a 2-roll mill. It was then cut into small pellets and the pellets were stored in a refrigerator.

Finally, the first formulation above was placed on one roll of a 2-roll mill and 6.6 parts by weight of the concentrate pellets were randomly dropped into the nip of the 2-roll mill as the blend rotated on one roll. The blend was then cut from the roll and was homogenized by 40 passes through the mill with folding after each pass. Then 23 gram portions of fully formulated gum were placed in a mold in a pre-cure oven at 110°C (230°F) for 40 minutes. The pre-cured gum was then placed in a foaming oven at 177.7°C (350°F) for 30 minutes. The results obtained with the polyphosphazene gums from Examples 1 and 2 are shown in the following table.

| | Example 1 | Example 2 |
|---|---|---|
| Foam quality | No foam | Good |
| Density kg/$m^3$ (lbs/$ft^3$) | — | 59.3 (3.7) |
| % Open cell[1] | — | 50 |
| Compression resistance[2] kPa (lbs/$m^2$) | — | 8.27 (1.2) |
| Compression set (%)[3] | — | 21.39 |
| Water absorbance g/$cm^2$ (g/$ft^2$)[4] | — | 0.04 (37.6) |

[1]ASTM D2856.
[2]ASTM D1056
[3]ASTM D1667
[4]MIL-P-1528OH.

As these results show, the formulation in which the gum contained phenoxy, p-ethylphenoxy and n-butoxy substituents did not form a foam whereas the gum containing phenoxy, p-ethylphenoxy, n-butoxy and o-allylphenoxy formed a high quality low density foam.

**Claims**

1. A sulfur cured polyphosphazene foam having a density below 96.1 kg/m³ said foam comprising 10 to 65 weight percent inorganic filler and 20 to 50 weight percent of a cured polyphosphazene elastomer which has a

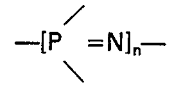

backbone in which n has an average value of at least 100 and the phosphorous substituents comprise at least 20 mole percent phenoxy, at least 20 mole percent lower alkylphenoxy, 1 to 50 mole percent alkoxy and 0.5 to 20 mole percent alkenylphenoxy, and said substituents are randomly distributed along said backbone.

2. A polyphosphazene foam as claimed in claim 1 in which said alkenylphenoxy is o-allylphenoxy.

3. A polyphosphazene foam as claimed in claim 2 in which the amount of o-allylphenoxy substituent is 6 to 15 mole percent.

4. A foamable curable polyphosphazene composition comprising

(a) a substantially linear polyphosphazene elastomer having the structure

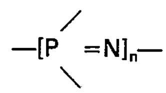

in which n has an average value of at least 100 and the phosphorous substituents comprise at least 20 mole percent phenoxy, at least 20 mole percent lower alkylphenoxy, 1 to 50 mole percent alkoxy and 0.5 to 20 mole percent alkenylphenoxy and said substituents are randomly distributed along said backbone, (b) an inorganic filler, (c) a blowing agent, and (d) a sulfur curing agent.

5. A polyphosphazene composition as claimed in claim 4, in which said alkenylphenoxy substituent is o-allylphenoxy.

6. A polyphosphazene composition as claimed in claim 5 in which the amount of o-allylphenoxy substituent is 6 to 15 mole percent.

**Patentansprüche**

1. Schwefelgehärteter Polyphosphazen-Schaum mit einer Dichte und 96,1 kg/m³, wobei der Schaum 10 bis 65 Gew.-% eines anorganischen Füllstoffes und 20 bis 50 Gew.-% eines gehärteten Polyphosphazen-Elastomers umfaßt, das eine

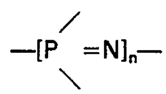

Grundstruktur aufweist, in der n einen mittleren Wert vom wenigstens 100 hat und die Substituenten am Phosphor wenigstens 20 Mol-% Phenoxy-Substituenten, wenigstens 20 Mol-% Niederalkylphenoxy-Substituenten, 1 bis 50 Mol-% Alkoxy-Substituenten und 0,5 bis 20 Mol-% Alkenylphenoxy-Substituenten umfassen und die Substituenten regellos entlang der Grundstruktur verteilt sind.

2. Polyphosphazen-Schaum nach Anspruch 1, worin das Alkenylphenoxy o-Allylphenoxy ist.

3. Polyphosphazen-Schaum nach Anspruch 2, worin die Menge an o-Allylphenoxy-Substituent 6 bis 15 Mol-% ist.

4. Schäumbare, härtbare Polyphosphazen-Zusammensetzung, umfassend

(a) ein im wesentlichen lineares Polyphosphazen-Elastomer mit der Struktur

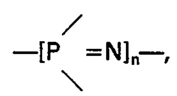

worin n einen mittleren Wert von wenigstens 100 hat und die Substituenten am Phosphor wenigstens 20 Mol-% Phenoxy-Substituenten, wenigstens 20 Mol-% Niederalkylphenoxy-Substituenten, 1 bis 50 Mol-% Alkoxy-Substituenten und 0,5 bis 20 Mol-% Alkenylphenoxy-Substituenten umfassen und die Substituenten regellos entlang der Grundstruktur verteilt sind;

(b) einen anorganischen Füllstoff;

(c) ein Treibmittel; und

(d) ein Schwefel-Härtungsmittel.

5. Polyphosphazen-Zusammensetzung nach Anspruch 4, worin der Alkenylphenoxy-Substituent o-Allylphenoxy ist.

6. Polyphosphazen-Zusammensetzung nach Anspruch 5, worin die Menge an o-Allylphenoxy-Substituent 6 bis 15 Mol-% beträgt.

**Revendications**

1. Mousse de polyphosphazène à durcissement au soufre possédant une densité inférieure à 96,1 kg/$m^3$, la dite mousse comprenant 10 à 65% en poids de charge inorganique et 20 à 50% en poids d'un élastomère de polyphosphazène durci qui possède un squelette

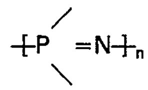

dans lequel n a une valeur moyenne d'au moins 100, et les substituants du phosphore comprennent au moins 20 moles pourcent de phénoxy, au moins 20 moles pourcent d'alkylphénoxy inférieur, 1 à 50 moles pourcent d'alkoxy et 0,5 à 20 moles d'alcénylphénoxy, les dits substituants étant distribués de manière aléatoire le long dudit squelette.

2. Mousse de polyphosphazène selon la revendication 1, dans laquelle le dit alcénylphènoxy est un o-allylphénoxy.

3. Mousse de polyphosphazène selon la revendication 2, dans laquelle la quantité du substituant o-allylphénoxy est égale à 6—15 moles pourcent.

4. Composition de polyphosphazène expansible et durcissable comprenant

(a) un élastomère de polyphosphazène essentiellement linéaire à structure

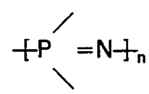

dans laquelle n a une valeur moyenne d'au moins 100 et les substituants du phosphore comprennent au moins 20 moles pourcent de phénoxy, au moins 20 moles pourcent d'alkylphénoxy inférieur, 1 à 50 moles pourcent d'alkoxy et 0,5 à 20 moles pourcent d'alcénylphénoxy, lesdits substituants étant distribués de manière aléatoire le long dudit squelette, (b) un filler inorganique, (c) un agent gonflant et (d) un agent de durcissement au soufre.

5. Composition de polyphosphazène selon la revendication 4, dans laquelle le substituant alcénylphénoxy est le o-allylphénoxy.

6. Composition de polyphosphazène selon la revendication 5, dans laquelle la quantité de substituants o-allylphénoxy est égale à 6—15 moles pourcent.